Europäisches Patentamt

(19) European Patent Office

Office européen des brevets

(11) **EP 0 736 984 A1**

(12) **EUROPEAN PATENT APPLICATION**
published in accordance with Art. 158(3) EPC

(43) Date of publication:
09.10.1996 Bulletin 1996/41

(51) Int. Cl.⁶: **H04B 10/00**, G01N 24/08,
G01R 33/20

(21) Application number: 95905815.7

(22) Date of filing: 20.12.1994

(86) International application number:
PCT/RU94/00281

(87) International publication number:
WO 95/17797 (29.06.1995 Gazette 1995/27)

(84) Designated Contracting States:
DE GB

(30) Priority: 21.12.1993 RU 93056518
18.11.1994 RU 94041635

(71) Applicants:
• BAUROV, Jury Alexeevich
Mytischi 141021 (RU)
• OGARKOV, Vadim Mikhailovich
Kaliningrad, 141070 (RU)

(72) Inventors:
• BAUROV, Jury Alexeevich
Mytischi 141021 (RU)
• OGARKOV, Vadim Mikhailovich
Kaliningrad, 141070 (RU)

(74) Representative: Popp, Eugen, Dr. et al
MEISSNER, BOLTE & PARTNER
Widenmayerstrasse 48
80538 München (DE)

(54) **METHOD OF TRANSMITTING INFORMATION AND VARIATIONS OF A DEVICE FOR CARRYING OUT THE SAID METHOD**

(57) The invention relates to communications technology, more specifically, to the transmission of information, especially over long and ultra-long distances. According to the invention, the transmission of information involves the creation of an information signal which is propagated by the creation and modification in the local region of space of a sum vector potential ( $\vec{A}_{sum}$ ) equal to the sum of the vector potential ( $\vec{A}$ ) of the magnetic field and the cosmological vector potential ( $\vec{A}_{ig}$ ); reception of the signal involves registering the physical effects associated with a region in space with a reduced value of the sum potention ( $\vec{A}_{sum}$ ) referred to above and its modifications. Variations of the device ("Information transmission systems") comprise: a transmitter (5) with signal emitting elements (6, 17, 19) and modulators (7, 18, 19), whose magnetic field has a vector potential (1) ( $\vec{A}$ ) at an angle of between 90° and 270° to the cosmological vector potential (2) ( $\vec{A}_{ig}$ ); and a receiver (9) with sensing elements in the form, in a first embodiment, of a container (10) housing a β-emitting radioactive substance and provided with a β decay sensor (11), said sensor being connected to a system which analyses the signal parameters of the signal originating from the sensor and emits an information signal. In a second embodiment, the sensing elements take the form of bodies (13, 23) which pass through the inner aperture of the ring of a superconducting quantum interferometer (14) which is connected to system which analyses the signal parameters of the signal originating from the interferometer and emits an information signal.

Fig. 1

## Description

### Field of invention

The present invention relates to communication technology, namely, to information transfer mainly for long and very long distances.

### Background of the invention

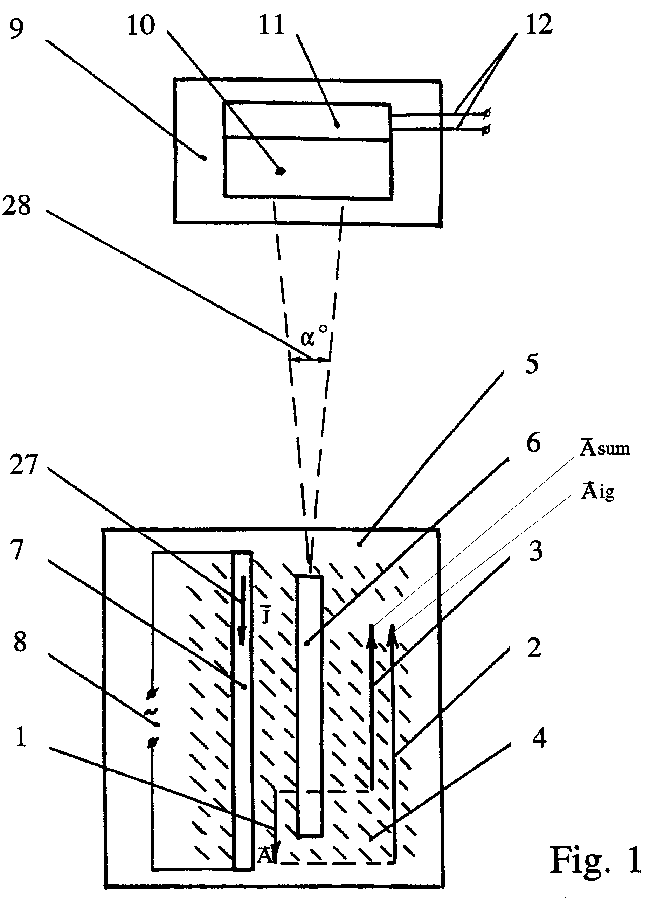

The known method of information transfer comprise forming an information signal, transmitting it through a communication channel by means of electromagnetic waves, and the signal detecting. The apparatus for carrying out this method, i.e. the information transfer system, includes a transmitter and a detector of the signal (see, for example: Yu.S.Shinakov, Yu.M.Kolodjazhny, "The foundations of radio engineering", Radio and Communication, Moscow, 1983, pp. 15-21, fig. 1.3, in Russian).

A limitation of these method and system is that the range and the rate of the signal transmission are restricted, the first is by the radiosignal attenuation in space and the second is by the electromagnetic wave propagation velocity. As a consequence the time it takes for a signal to travel great distances is of substantial value and not always acceptable for information exchange, for instance, with space objects even being within the solar system.

### Disclosure of the invention

An object of the present invention is to establish a method of information transfer which would provide an increase in range and rate of information signal transmission, and embodiments of a system realizing said method, too.

The solution of the stated problem is achieved by means of:

- forming and transmitting an information signal by way of creating and changing a field of the summary vector potential $\vec{A}_{sum}$ equal the sum of a current vector potential $\vec{A}$ and the intergalactic vector potential $\vec{A}_{ig}$ in a local space region and detecting the signal by registering physical effects caused by the existence and variations of the said summary potential $\vec{A}_{sum}$ in the said space region;

- creating and varying the field of the said summary vector potential sum in a local space region as well as forming and transmitting the information signal by the action of the current vector potential ( $\vec{A}$ ) variable field, directed at an angle of 90°-270° to the intergalactic vector potential $\vec{A}_{ig}$, on a radiator mounted in the transmitter located in the created region of decreased values of the summary potential $\vec{A}_{sum}$ and pointed at the signal detector which detects the signal through registering changes in decay activity of a radioactive substance due to the effect of the said summary potential variations;

- using as a radioactive substance the materials having the capacity for β-decay;

- creating and varying the field of the said summary vector potential $\vec{A}_{sum}$ in a local space region as well as forming and transmitting the information signal by the action of the current vector potential ( $\vec{A}$ ) variable field, directed at an angle of 90°-270° relative to the intergalactic vector potential $\vec{A}_{ig}$, on a radiator mounted in the transmitter located in the created region of the lowered values of the summary potential $\vec{A}_{sum}$ and oriented at the signal detector, and detecting the signal through registering changes in electric voltage of a superconducting quantum interferometer (SQUID) which is located in the signal detector;

- creating the field of the current vector potential $\vec{A}$ by passing electric current through current-carrying elements positioned in the space region where the radiator locates;

- creating the field of the current vector potential $\vec{A}$ by location of constant magnets in the space region in which the radiator is;

- using for a field of vector potential $\vec{A}$ that of vector potential natural sources, for example, the Earth's vector potential;

- carrying out the variation of the magnitude of the summary vector potential $\vec{A}_{sum}$ equal the sum of the current vector potential $\vec{A}$ and the intergalactic vector potential $\vec{A}_{ig}$ in the space region where the radiator locates, by varying the value and/or the direction of electric current passing through the current-carrying elements;

- varying the magnitude of the summary vector potential $\vec{A}_{sum}$ in the space region where the radiator locates, by changing the relative positions of the radiator and the source of the vector potential field;

- initially polarizing the transmitter radiator and mounting it in the transmitter so that the magnetic moments of the atoms and the spins of the elementary particles of the radiator substance may be directed perpendicularly to the intergalactic vector potential $\vec{A}_{ig}$;

- positioning the transmitter radiator of the first embodiment of information transfer system in the field of the modulator current vector potential and making the sensor of the detector as a container with a β-radioactive substance provided with a β-decay radiotracer, for example, an electronic counter, connected to a system of analyzing the radiotracer signal and separating the information one;

- making the transmitter radiator of the first embodiment of the information transfer system from a material with density no less than 8000 kg/m$^3$;
- positioning the transmitter radiator of the second embodiment of the information transfer system in the field of the modulator current vector potential and making the sensor of the detector in the form of a material body passing through the opening of the ring of SQUID connected to a system of analyzing the SQUID signals and separating the information one;
- making the transmitter radiator and the material body of the detector sensor of the second embodiment of the information transfer system from a material with density no less than 8000 kg/m$^3$;
- positioning the material body of the detector sensor and the SQUID of the second embodiment of the information transfer system into an electromagnetic shield;
- making the transmitter radiator of any embodiment of the information transfer system as a rectilinear rod and the modulator as a conductor connected to a current source and arranged in parallel with the rod-radiator;
- making the rod-radiator of any embodiment of the information transfer system with a diameter to length ratio no more than 0,001;
- making the radiator and the modulator of the transmitter of any information transfer system embodiment as material bodies of an arbitrary shape;
- making the information signal transmitter radiator and modulator of any embodiment of the information transfer system in the form of spirals, therewith the line tangent to the axis of the spiral-radiator wire at its exit end must be directed towards the region where the information signal detector is located;
- making the information signal transmitter radiator of any information transfer system embodiment in the form of a multilayer spiral;
- making the spirals of the information signal transmitter radiator and modulator of any information system embodiment in the form of toroids;
- arranging the radiator spiral of any information transfer system embodiment in the internal space of the modulator spiral;
- arranging the radiator spiral of any information transfer system embodiment outside the modulator spiral;
- making the detector sensing element material body of the second information transfer system embodiment in the form of a rectilinear rod passing through the opening of the SQUID ring;
- making the detector sensing element of the second information transfer system embodiment as a material body of an arbitrary shape passing through the opening of the SQUID ring;
- making the material body of the information signal detector sensor of the second information transfer system embodiment in the form of a spiral passing through the opening of the SQUID ring, therewith the line tangent to the axis of the spiral wire at its exit end on the spiral must be directed towards the region where the information signal detector is located;
- making the spiral of the detector sensor of the second information transfer system embodiment as a multilayer one;
- making the transmitter modulator and radiator of any embodiment of the information transfer system as a unit, for example, in the form of a spiral connected to an electric current source;
- making the transmitter radiator of any embodiment of the information transfer system from a substance being in liquid state;
- making the transmitter radiator of any embodiment of the information transfer system from a substance being in gaseous state;
- making the transmitter radiator of any embodiment of the information transfer system from a substance being in plasma state;
- making the transmitter modulator of any embodiment of the information transfer system from a substance being in liquid state;
- making the transmitter modulator of any embodiment of the information transfer system from a substance being in plasma state;
- making the detector sensor material body of the second embodiment of the information transfer system from a substance being in liquid state;
- making the detector sensor material body of the second embodiment of the information transfer system from a substance being in gaseous state;
- making the detector sensor material body of the second embodiment of the information transfer system from a substance being in plasma state;
- making the transmitter modulator of any embodiment of the information transfer system as a magnet system based on constant magnets and provided with a drive for changing its position relative to the transmitter radiator.

When realizing the described "Method ..." and making the apparatus (information transfer systems) in the manner shown above, the information signal generation and radiation by way of forming in a local space region, where the transmitter radiator is located, a zone with the magnitude of the summary vector potential $\vec{A}_{sum}$ (equal the sum of the current vector potential $\vec{A}$ and the intergalactic vector potential $\vec{A}_{ig}$) varying in accordance with the character of the signal to be transmitted, as well as the registeration by detector devices of the physical effects caused by variations of the said summary potential $\vec{A}_{sum}$ and containing information on the signal being transmitted, ensure transmission and detection of the information signal which propagates practically instantaneously through the space region in which the intergalactic vector potential $\vec{A}_{ig}$ exists, i.e., according to present views, no less than in the region of our Galaxy.

The physics of the information signal generating, transmitting, propagating and detecting according to the present invention is the following.

In the article "Plasma physics and some issues of general physics", the collected volume of scientific papers of the Central Institute of Machine Building, 1990, p.p.71, 84 (in Russian), being a further development of the earlier works (Yu.A.Baurov, Yu.N.Babajev, V.K.Ablekov, "On ambiguity of the electromagnetic field propagation velocity", Doclady Acad.nauk, v.262, N1, 1982, p.68; Yu.A.Baurov, Yu.N.Babajev, V.K.Ablekov, "Electromagnetic vacuum and strong interactions", Docl.Acad.Nauk, v.265, N5, p.1108; Yu.N.Babajev, Yu.A.Baurov, "On origin of fundamental constants and certain quantum numbers", preprint of the Institute of Nuclear Research, Academie of Sciences, USSR, Π-0362, Moscow, 1984, -all in Russian), dedicated to new notions on the physical vacuum structure, it is shown that there exists a multitude of one-dimensional discrete "magnetic" fluxes (MF) being equal in magnitude to

$$ | \ \vec{A}_{sum} \ | \ \cdot \ X(i) = const $$

where $| \vec{A}_{sum} |$ is the modulus of the summary vector potential $\vec{A}_{sum}$ equal the sum of the vector potential $\vec{A}$ of a current and the new fundamental vectorial value, the intergalactic vector-potential $\vec{A}_{ig}$ having constant modulus and direction ($| \vec{A}_{ig} | = 1.95 \cdot 10^{11} Gs \cdot cm$); x(i) is the length of MF (its quantum number), i is an index (1,2,3,...).

In accordance with the theoretical model of the observable three-dimensional physical space ($R_3$) structure, it arises as a result of minimizing the potential energy of one-dimensional discrete MFs in the one-dimensional space $R_1$ formed by them. More accurately, the space $R_3$ is fixed by us as a result of summation of the originated dynamics of the one-dimensional discrete MFs in times much more than quantum of time $10^{-43}$s. As a consequence, the wave properties of elementary particles appear. In the above mentioned work "Plasma physics and some issues of general physics" is shown that there exists in nature the minimum four-contact interaction of the one-dimensional discrete MFs with the minimum residual positive potential energy 33eV. By this interaction we may mean a pair of electron neutrino and antineutrino ($v_e \leftrightarrow \tilde{v}_e$) . Therewith the physical meaning of Geizenberg's uncertainty interval ($\Delta r \cdot \Delta p > h$) is revealed and it is proved that for the minimum four-contact interaction in $R_3$ the scatter in coordinates is

$$ \Delta r = \frac{h}{P_{min}} = \frac{h}{\Phi \cdot m_0 \cdot |\vec{A}_{sum}| \cdot C_0} = \frac{h}{\Phi \cdot 2m \cdot C_0} = 10^{28} cm $$

Here h is the Planck's constant;

$\Delta r$ and $\Delta p$ are the scatters in coordinate and momentum of the four-contact interaction of the one-dimensional discrete magnetic fluxes in $R_3$;

$\phi = 0.9 \cdot 10^{-34}$ is the probability of the four-contact interaction of MFs at a point of the three-dimensional space $R_3$;

$$ P_{min} = \Phi \cdot m_0 \cdot | \ \vec{A}_{sum} \ | \cdot C_0 = \Phi \cdot 2m \cdot C_0 $$

is the minimum momentum of the four-contact interaction of MFs;

$$ 2m = m_0 \cdot | \ \vec{A}_{sum} \ | $$

is rest mass of the pair "neutrino-antineutrino";

$C_0$ is the light speed.

It follows from this theory that in each elementary particle the four-contact interaction is present that is responsible for the origin of the particle interior geometrical space. Due to free four-contact interaction the information exchange takes place between the elementary particles, i.e. the interior space of an elementary particle is being built with regard to the external factor, namely, the presence of the free four-contact interaction. Therewith the eight-contact interaction arises with the spin equal 2h.

Now, if we vary (diminish) the summary potential $\vec{A}_{sum}$ (equal the sum of the intergalactic vector potential $\vec{A}_{ig}$, being constant in magnitude and direction, and the current vector potential $\vec{A}$ ) in a certain space region where a material body is placed, for example, by the use of a current field whose vector potential $\vec{A}$ is oriented at an angle of 90°-270° with respect to the intergalactic vector potential $\vec{A}_{ig}$, we shall thereby interfere with the formation process of the elementary particle interior space, and information on this variation will be instantaneously transferred to other particles of the Universe through the meditation of the free (exchange) four-contact interaction.

In such a manner in the observable space (for instance, in the Galaxy), the four-constant interaction is an instantaneous carrier of information due to its inherent features (mass and spin) manifestating themselves at different points of the three-dimensional space $R_3$ at a time.

If we place a long body in a field region with diminished (as compared to the intergalactic vector potential $\vec{A}_{ig}$) value of the summary potential $\vec{A}_{sum}$, information on the effect that the body in question is long will be also instantaneously transferred into the Universe because the yield of pairs "neutrino-antineutrino" from the body will be much more in the longitudinal direction than in the transverse one.

If the material body is polarized, i.e. magnetic moments of its atoms and, moreover, spins of elementary particles are predominantly oriented in one direction (perpendicularly to that of the intergalactic electromagnetic vector potential $\vec{A}_{ig}$), the radiation effect of the generated information signal is enhanced since we substancially increase the number of particles whose space forming process depends with greater probability on the summary potential ( $\vec{A}_{sum}$) field variation (diminution).

The detection of a radiated signal can be performed by way of registering a variety of physical effects caused by the origin, existence and variation (in space) of a region with the decreased value of the summary potential $\vec{A}_{sum}$ and by its changes as well.

One of such more pronounced physical effects is that of variation of a radioactive substance decay activity since the weak interaction to which also the β-decay belongs, presents, in accordance with the theory to be developed, just one of natural phenomena defining the process of formation of elementary particle geometrical space.

It is known, in particular, ( see, for example, L.B.Okunj, "Leptons and quarks", Publ. house "Nauka", Chief editorial boards of physico-mathematical literature, 2-d edition Moscow, 1990, p.42; N.F.Nelipa, "Physics of elementary particles", Publ. house "Vysshaja shkola", Moscow, 1977, p.485, equ.3.22, both in Russian) that the probability W of the (-decay is proportional to the fifth degree of the energy released in β-decay:

$$W \sim | C_v |^2 \cdot E^5 \text{ and } W \sim | C_A |^2 \cdot E^5$$

where $C_V$ and $C_A$ are the vectorial and the axial constants of the weak interaction; E is the energy released in β-decay.

According to the theory described in Ref.2

$$|C_v| = \left( \frac{hC}{4/3 \, e_0^2} \right)^{2.5} \cdot \frac{hC}{3^{1/4}} \cdot \frac{hC}{|\vec{A}_{sum}|^2}$$

$$|C_A| = 0.5 \cdot e_0^2 \cdot \left( \frac{hC}{4/3 \, e_0^2} \right)^4 \cdot \frac{hC}{|\vec{A}_{sum}|^2}$$

i.e.

$$|C_v| \sim \frac{1}{|\vec{A}_{sum}|^2} \ , \quad |C_A| \sim \frac{1}{|\vec{A}_{sum}|^2} \ , \quad и \quad E \sim |\vec{A}_{sum}|$$

hence $W \sim |\vec{A}_{sum}|$,

i.e. the probability of the β-decay is proportional to the magnitude of the summary vector potential $\vec{A}_{sum}$ and is varying with it. These theoretical results were verified by experiments performed to investigate the effect of the summary vector potential ( $\vec{A}_{sum}$) field onto the β-decay rate (see, for example, Yu.Baurov, V.Schutov, "On the vector magnetic potential influence onto the rate of β-decay'" International conference: "Space, time, gravitation", Program and abstracts, May 23-28, 1994, St.-Petersburg, Russia).

Another physical effect acceptable for registering an information signal being transmitted in accordance with the present invention and caused by existence in space (in the transmitter) of a local region with the diminished value of the summary potential $\vec{A}_{sum}$ and variations of this potential, is the effect of corresponding variations (in entire Galaxy, i.e. in any zone of the signal detector location) of four-contact interaction characteristics, which influence the value of the one-dimensional discreetmagnetic fluxes. Variations of these fluxes cause the SQUID voltage to vary, too (see, for example, V.V.Shmidt, "Introduction to Physics of Superconductors", publ. house "Nauka", Chief editorial boards of physicomathematical literature, 4-th edition, Moscow, 1982, p.p. 108-121, in Russian), which SQUID is arranged in the signal detector, and this makes it possible to separate the transmitted information signal.

Since the SQUIDs are very sensitive to the signal values registered by them, it is desirable, for purposes of abating the level of extraneous noise, to place the material body of the detector and the superconducting quantum interferometer (SQUID) into an electromagnetic shield. Therewith a technical possibility remains to register the transmitted signal because the existence and space variations of the vector potential take place even in the absence (shielding) of magnetic flux density in this space region (see, for example, I.R.Walker, "Verification of the Aharonov-Bohm effect in superconductors by use of toroidal flux geometry", Physical Review B, v 33, N 7, 1986, p.p. 5028-5029).

The present invention is consistent with the following criteria of patentability:

- the criterion of novelty (N), because the proposed technical solution cannot be known from the present-day level of technology, i.e. there are no data about analogs universally known to the date of priority;
- the criterion of the inventive step (IS), since the proposed invention is not obvious, for those skilled in the art, from the present-day level of technology and is based on new physical principles and phenomena;
- the criterion of industrial applicability (IA) as there is an experimental evidence of existence of the new physical phenomena the invention is based on, in particular, the phenomenon of action of the summary vector potential value space variation on the (-decay rate (see the above mentioned work: Yu.Baurov, V.Schutov, " On the magnetic vector potential influence onto the rate of (-decay", International conference: "Space, time, gravitation", Program and abstracts, May 23-28, 1994, St-Petersburg, Russia).

**The brief description of drawings**

The essence of the present invention is explained in more detail with reference to the drawings, in which:

Fig. 1 is a schematic diagram of one of possible constructions of the apparatus (the system of information transfer, first variant) embodying features of the proposed "Method . . .". In this embodiment the radiator 5 of the information transfer system transmitter is made as a rectilinear rod 6 and placed in the field of the modulator 7 current vector potential which modulator is made as a conductor connected to an electric current source 8 and arranged in parallel with the rod-radiator 6 (according to claim 16). The sensing element of the information signal detector 9 is built in the form of a container 10 with a (-radioactive substance and provided with a β-decay activity sensor 11, for instance, with an electron counter, connected to a system analyzing parameters of signals coming from the sensor 11 and separating the information signal (in accordance with claim 11);

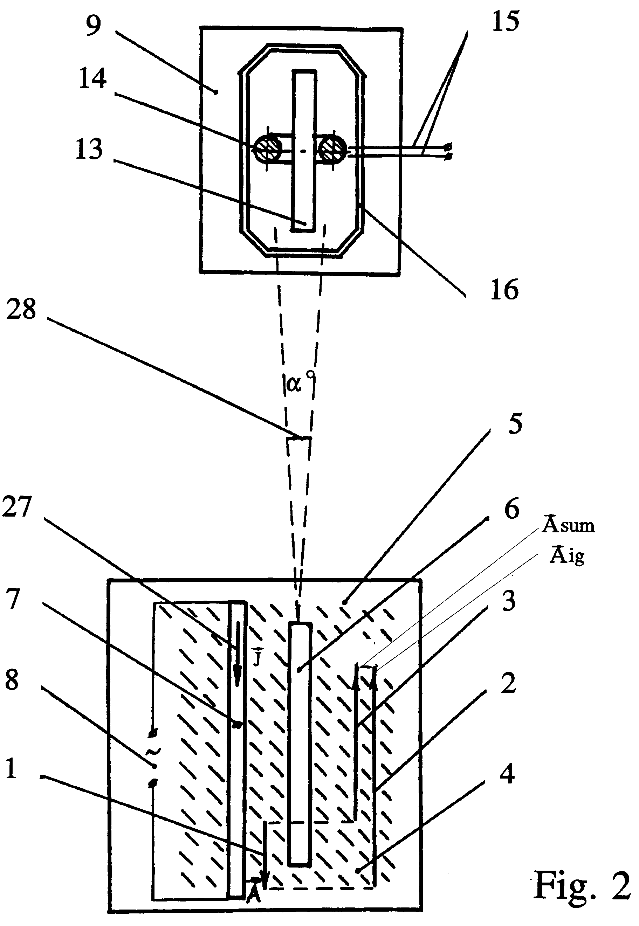

Fig.2 is a schematic diagram of one of possible constructions of the apparatus (the information transfer system, second embodiment) according to the proposed method. In this embodiment the radiator of the transmitter 5 is made as a rectilinear rod 6 and placed in the field of the modulator 7 current vector potential. The modulator is made as a conductor connected to an electric current source 8 and positioned in parallel with the rod-radiator 6 (according to claim 16). The sensing element of the detector 9 is made as a material body (rectilinear rod 13) placed within the ring of a SQUID 14 which is connected to a system analyzing parameters of signals coming from SQUID and separating the information signal (in accordance with claims 13, 24);

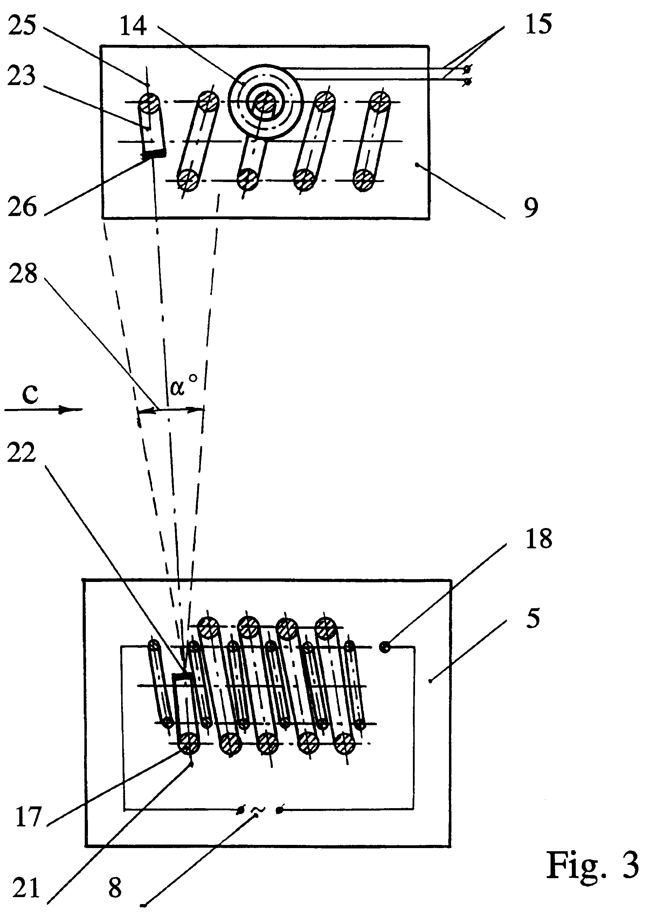

Fig.3 is a schematic diagram of one of possible embodiment of the apparatus (system of information transfer) in which the modulator and the radiator of the transmitter 5 of the information signal are made in the form of spirals 17, 18 (according to claims 19,23), and the material body of the detector 9 sensing element is made as a spiral 23 passing through the ring of the SQUID 14 in accordance with claim 26;

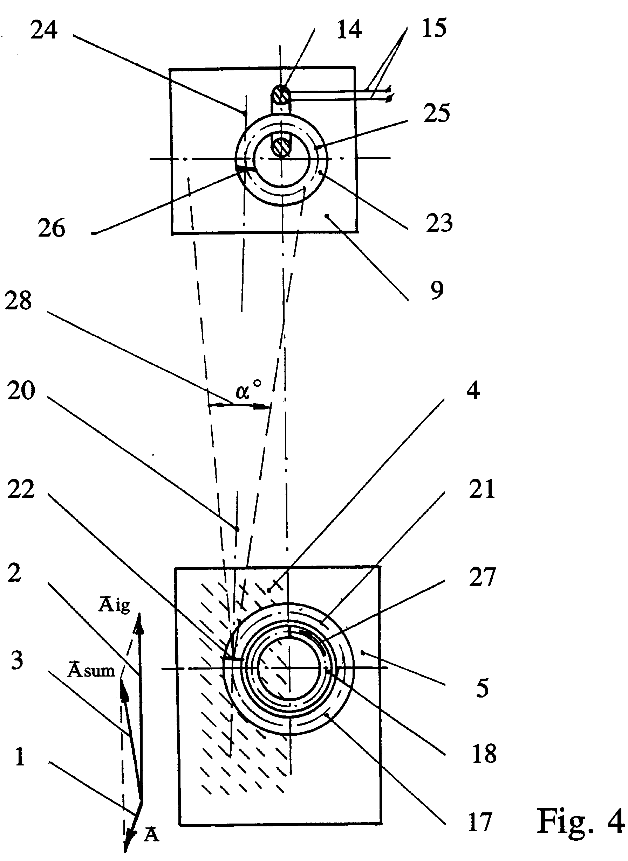

Fig.4 is a side view (in the direction of the arrow C of Fig.3) of the embodiment of the information transfer system shown in Fig.3 illustrating the distinctive features of the invention. These are orientation of the line 20 tangent to the axis 21 of the spiral-radiator 17 wire (at its exit point 22 on the spiral) towards the region where the information signal detector 9 is positioned (according to claim 19) and orientation of the tangent to the axis 25 of the spiral-detector 23 wire at its exit point 26 on the spiral towards the region in which the information signal transmitter 5 is (in accordance with claim 26);

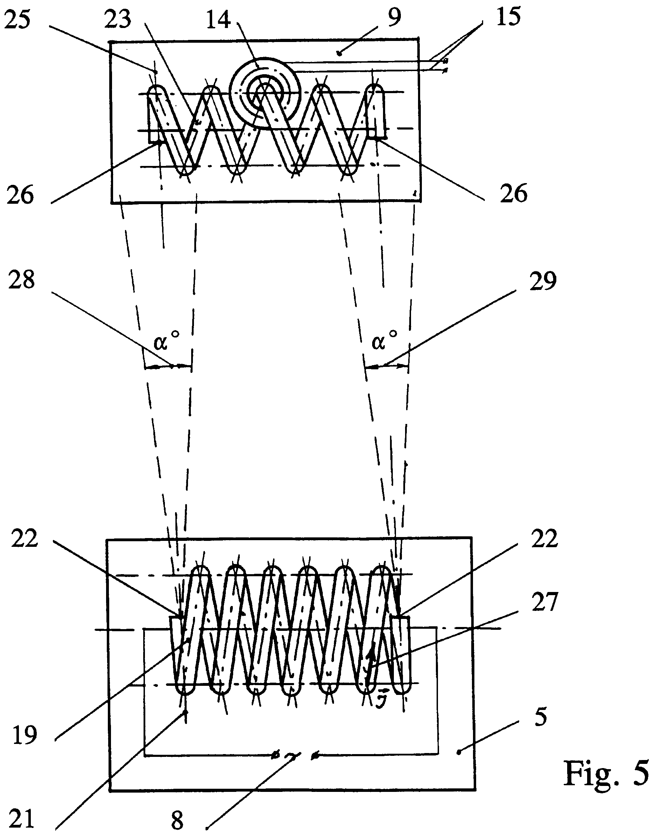

Fig.5 is a schematic diagram of one of possible embodiments of the apparatus (information transfer system) in which the modulator and the radiator of the information signal transmitter 5 are made as a unit (according to claim 28), in particular, in the form of a spiral 19, therewith the tangents to the axis 21 of the spiral-radiator-modulator (19) wire at its exit points 22 on the spiral are oriented towards the region where the detector 9 of the information signal is positioned (according to claim 19), and the material body of the detector 9 sensor is configured as a spiral 23 passing through the ring of the SQUID (14), therewith the tangents to the axis 25 of the spiral-detector 23 wire at its exit points 26 on the spiral are oriented towards the region in which the information signal transmitter 5 is positioned, in accordance with claim 26;

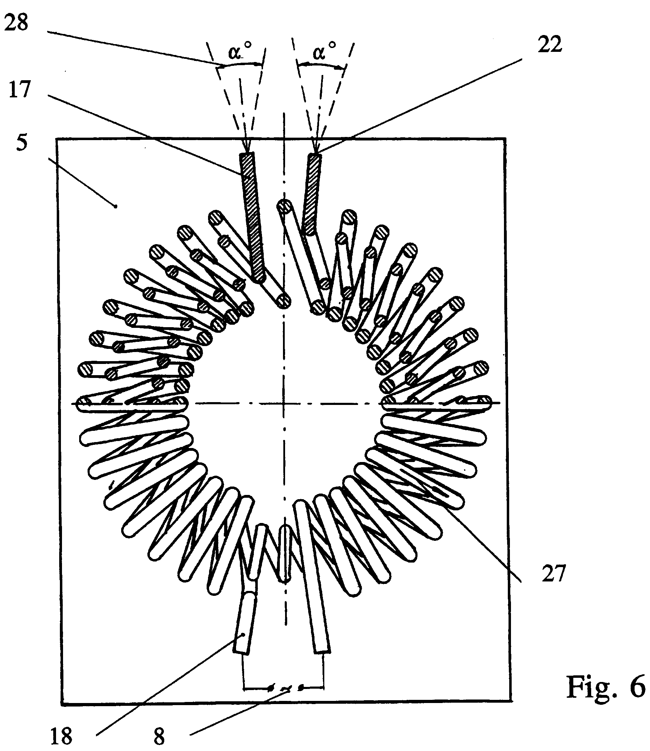

Fig.6 is a schematic diagram of one of embodiments of the apparatus (system of information transfer) in which the spirals of the transmitter 5 radiator and modulator are made in the form of toroids, therewith the radiator spiral 17 is arranged in the interior space of the modulator spiral 18 (according to claims 21, 22).

In Figs. 1,2,4 are shown the relative positions of the vector potential 1 ( $\vec{A}$ ) of the current of the information signal transmitter 5 modulators 7 and 18, the intergalactic vector potential 2 ( $\vec{A}_{ig}$), and the elements of the apparatus construction, which relative positions are necessary for the apparatus functioning.

Referring now to the drawings there are shown:

1 - the vector potential $\vec{A}$ of the current of the information signal transmitter 5 modulators 7, 18, 19. The potential $\vec{A}$ is shown in Figs. 1, 2, 4;

2 - the intergalactic vector potential $\vec{A}_{ig}$ (Figs. 1, 2, 4);

3 - the summary vector potential $\vec{A}_{sum}$ being equal the sum of the vector potentials 1 ( $\vec{A}$ ) and 2 ( $\vec{A}_{ig}$) (Figs. 1, 2, 4);

4 - the space region with the diminished summary potential 3 ( $\vec{A}_{sum}$) (Figs. 1, 2, 4);

5 - the transmitter of the information signal (Figs. 1-6);

6 - the radiator of the information signal, made as a rectilinear rod (Figs. 1, 2);

7 - the modulator made as a rectilinear conductor (Figs. 1, 2);

8 - the electric current source (Figs. 1-3, 5, 6);

9 - the detector of the information signal (Figs. 1-5);

10 - the container with a β-radioactive substance (Fig. 1);

11 - the sensor of β-decay activity (Fig.1);

12 - the leads from the sensor 11 to the system of analysis of the signal parameters (coming from the sensor) and of the information signal separation (Fig.1);

13 - the material body of the detector 9 sensing element, made as a rectilinear rod (Fig.2);

14 - the superconducting quantum interferometer (SQUID), (Figs.2-5);

15 - the leads from SQUID 14 to the system of SQUID signal analysis and the information signal separation (Figs.2-5);

16 - the electromagnetic shield of the detector 9 sensing element (Fig.2);

17 - the spiral-radiator of the transmitter 5 (Figs.3, 4, 6);

18 - the spiral-modulator of the transmitter 5 (Figs.3, 4, 6);

19 - the spiral-radiator-modulator of the transmitter 5 (Fig.5);

20 - the tangent line to the axis 21 of the wire of the spirals-radiators 17, 19 at their exit points 22 on the spirals (Fig.4);

21 - the axis of the spirals-radiators 17, 19 of the transmitter 5 (Figs.3-5);

22 - the exit points of the axis 21 of the spirals-radiators 17, 19 (Figs.3-6);

23 - the spiral-detector (Figs.3-5);

24 - the tangent to the axis 25 of the spiral-detector 23 wire at its exit points 26 from the spirals (Fig.4);

25 - the axis of the spiral-detector 23 (Figs.3-5);

26 - the exit points of the axis 25 of the spiral-detector 23 (Figs.3-5);

27 - the direction of the current I passing through the modulators 7, 18, 19 from the electric current source 8 of the information signal transmitter 5 (Figs.1, 2, 4-6);

28 - the spread angle ( of the information signal radiated by the transmitter 5 (Figs. 1-6).

**Embodiments of the invention**

The applicated method of information transfer is realized in the process of functioning of two variants of apparatus (systems of information transfer).

In the first embodiment of the construction, the information transfer system (Fig. 1) contains a transmitter 5 with a radiator 6 positioned in the field of the modulator current vector potential, which modulator is connected to an electric current source 8, and the detector 9 of the information signal with a sensor made in the form of a container 10 with a β-radioactive substance and provided with a measuring element 11 of the β-decay activity, for instance, with an electron counter, electrically connected (through the leads 12) to an analyzer of signal parameters coming from the measuring element 11, which analyser separates the information signal (the analyser is not shown in the Fig. 1).

In the second embodiment of the apparatus, the information transfer system (Fig.2) contains a transmitter 5 with a radiator 6 positioned in the field of the vector-potential of a modulator 7 connected to an electric current source 8, and a detector 9 of the information signal with a sensing element made as a material body 13 passing through the opening of a SQUID (14) ring, which SQUID is connected electrically, through the leads 15, to an analyser of signal parameters coming from it, which analyser (being not shown in the Fig.2) separates the information signal. The sensing element of the detector 9 (the material body 13 and the SQUID 14) may be placed into an electromagnetic shield 16.

In both variants of the construction of the information transfer system, the transmitter 5 radiator can be made either as a rectilinear rod 6 (then the modulator has the form of a rectilinear conductor 7 connected to an electric current source 8 and arranged in parallel with the rod-radiator 6 (Fig. 1), according to claim 16), or as material bodies of an arbitrary shape (claim 18), in particular, in the form of multilayer ore single-layer spirals 17, 18, therewith the line 20 tangent to the axis 21 of the spiral-radiator 17 wire at its exit point 22 on the spiral is oriented towards the region where the information signal detector 9 is positioned (claims 19, 20, Figs.3,4). The radiator and the modulator of the transmitter 5 can also be build as a unit, either in the form of a rectilinear rod-conductor (Fig.2) or as a material body of any other shape, in particular, as a spiral-radiator-modulator 19 connected to the electric current source 8 (Fig.5, claim 28).

The spirals of the information signal transmitter (5) radiator (17) and modulator (18) can be made as toroids (the claim 21). The spiral 17 of the radiator can be placed either in the interior space of the modulator spiral 18 (Fig.6, claim 22) or outside of it (claim 23).

The material body of the transmitter (9) sensing element in the second variant of the information transfer system construction can be made either as a rectilinear rod 13 passing through the opening of the SQUID ring (14, Fig.2, claim 24), or as an arbitrarily shaped material body (claim 25), in particular, in the form of a spiral 23 also passing through the opening of the SQUID (14) ring, therewith the line 24 tangent to the axis 25 of the spiral-detector (23) wire at its exit point 26 on the spiral being oriented towards the region where the transmitter 5 of the information signal is placed (Figs. 3, 4, 5, claim 26). In this last case the detector spiral can be made as a multilayer one (claim 27).

As a material the transmitter (5) radiators 6, 17, 19 and the detector (9) sensing element bodies 13, 23 are made from, substances with substantially high density, no less than 8000 kg/m3, are used, being separated from the series: brass, copper, molyodenum, lead, tantalum, tungsten usf (claims 12, 14).

The radiators and modulators of the transmitter 5 as well as the material bodies of the transmitter 9 sensing element can be also made from materials being in various physical states including liquid (mercury, for instance), gaseous or plasma ones (claims 29-36).

Besides the above described constructions in which the modulators 7, 18, 19 of the transmitter 5 are powered from the source 8 of electric current, the transmitter modulator of both apparatus variants can be made as a magnet system operating on constant magnets and provided with a drive for variating its position relative to the transmitter radiators 6, 17 (claim 37).

**The industrial applicability**

In accordance with the proposed "Method. . . ", the information transfer (i.e. functioning of the applicated apparatus, the systems of information transfer) is performed in the following manner.

Any of the radiators 6, 17, 19 of the transmitter 5 is oriented, at least with one of its ends, towards the region where the detector 9 is.

A varying field with the vector potential 1 ( $\vec{A}$ ) oriented at angle of 90°-270° relative to the intergalactic vector potential 2 ( $\vec{A}_{ig}$) is created in the transmitter 5 by way of passing the electric current 27 ( $\vec{I}$ ) from the source 8 through the modulators 7, 18, or 19 (according to claim 5). (On Figs. 1 and 2 the vector potential 1 ( $\vec{A}$ ) of the current 27 ( $\vec{I}$ ) is shown as oriented towards the intergalactic vector potential 2 ( $\vec{A}_{ig}$), i. e. at the angle of 180°. In Fig.4 the vector potential 1 ( $\vec{A}$ ) whose direction coincides with that of the current 27 ( $\vec{I}$ ), is, due to the current curvature, oriented variably with respect to $\vec{A}_{ig}$. A zone 4 with the relative orientation of the said potentials in the range of angles from 90° to 270° is here also created).

The sense of the intergalactic vector potential 2 ( $\vec{A}_{ig}$) is the same in vicinity of the Sun and nearest stars (According to the experimental data, this vector has a right assention coordinate of 270° ± 7°. See, for example, the articles Yu.A.Baurov, E.Yu.Klimenko, S.I.Novikov, "Experimental observation of space magnetic anisotropy", Doklady Academii Nauk of SSSR, v.315, N 5, 1990, p.p. 1116-1120 (in Russian); Yu.A.Baurov, E.Yu.Klimenko, S.I.Novikov, "Experimental observation of space magnetic anisotropy", Physics Letters A 162 (1992), p.p.32-34, North-Holland; Yu.A.Baurov, "Space magnetic anisotropy and new interaction in nature", Physics Letters A 181 (1993), p.p.283-288, North-Holland).

As a consequence, addition of the vector potential 1 ( $\vec{A}$ ) and 2 ( $\vec{A}_{ig}$) gives rise to a region 4 with the diminished summary vector potential 3 ( $\vec{A}_{sum}$) in a local space zone (the crosshatched region in Figs 1, 2, 4) in which region each of the radiators 6, 17 or 19 is placed. (It should be noted therewith that the addition of the vector 1 ( $\vec{A}$ ) and 2 ( $\vec{A}_{ig}$) illustrated graphically in Figs. 1, 2, 4 serves for clearness only. The sum of them, if expressed analytically, takes the form of a complex mathematical series. See, for example, the mentioned article of Yu.A.Baurov in Physics Letters A181 (1993), p.p.283-288).

When varying the vector potential 1 ( $\vec{A}$ ), for example, by way of variation of the electric current 27 (I) value in the modulators 7, 18, 19, the extent to which the summary vector potential 3 ( $\vec{A}_{sum}$) diminishes in the local space region 4 also varies. As a result, according to the above considered physics of the process, in the radiators 6, 17, 19 is generated, radiated, and instantaneously transmitted into space a signal carrying information on character of action of the vector potential 1 ( $\vec{A}$ ) field of the current 27 of the modulators 7, 18, 19 on the radiators 6, 17, 19 (i.e., practically, on character and law of the current 27 (I) variation). This signal propagates instantaneously for distances commensurable with our Galaxy sizes.

When this signal enters the detector 9 of the first embodiment of the apparatus (Fig. 1), it affects the radioactive substance being in the container 10 and varies this substance β-decay activity (i.e. the number of decays in a second, - see, for instance, Ch. Kukhling "Handbook of Physics", translated from German, ed.by E.M.Leykin, "Mir", Moscow, 1982, p.432, in Russian) which is recorded by known methods and devices of nuclear physics (activity sensors, counters of particles 11, -see, for example, "Principles and Methods of registering elementary particles", compiled and edited by Ljuk K.L.Yuan and Vu Tsjanj-Sjun, translated from English under the editorship of acad. L.A.Artsimovich, Foreign Literature Publishing House, Moscow, 1963, in Russian"; "Apparatus for registering and investigating the ionizing radiation's. Handbook", under the editorship of V.V.Matveev and B.I.Chazanov, Atomizdat, Moscow, 1965, in Russian").

The sensors 11 are connected through the leads 12 to the system analyzing the signal parameters coming from the sensor 11 (i.e. to the system of the transmitter 5 data processing and information signal separating). Separation of the transmitted signal (i.e. its detection) is performed through analyzing the character of going changes in the radioactive substance activity.

When entering the detector 9 of the second variant of the apparatus (Fig.2-5), the information signal varies values of magnetic fluxes in the material body 13 (and /or in the spiral-detector 23) what leads to electric voltage variation across the superconducting quantum interferometer (SQUID) 14 arranged in the signal detector 9; through the opening of its ring are bodies 13, 23 going. The SQUID 14 is connected through the leads 15 to the system of analysis of the signal parameters coming from the SQUID and of separation of the transmitted information signal (its detection).

For better performance of information transfer the radiator 6 of the transmitter 5 is initially polarized, for example, by the action of a magnetic field, and then positioned into the transmitter 5 so that magnetic moments of atoms and spins of elementary particles of the radiator may be oriented perpendicularly to the direction of the intergalactic vector potential 2 ( $\vec{A}_{ig}$) since this increases intensity of the transmitted signal in direction of the radiator axis, i.e. leads to improvement in conditions of the signal transmission and detection.

In operation of the transmitter 5 under constant exposure of radiators to the variable magnetic field of the current with the vector potential 1 ( $\vec{A}$ ), polarization of the radiators persists because the substance of radiators is characterized by the availability of hysteresis loop with the coercive force which reaches, for example, for hard magnetic materials, the great values (see, for instance, "Tables of physical values", Handbook under the editorship of acad. I.K.Kykoin, Atomizdat, Moscow, 1976, in Russian").

Although the radiators and modulators of the transmitter 5 as well as the material bodies of the detector 9 may be principally of an arbitrary form, if only, in accordance with claim 1, a zone 4 with the diminished summary vector potential 3 ( $\vec{A}$ ) to be created in a local space region, but since the transmitted information signal is emitted from the transmitter 5 radiators into space every which direction with an intensity along it being proportional to the total number of substance particles in radiators situated along this direction as to the number of particles along it, magnetic moments of atoms and spins of elementary particles of which are directed perpendicularly to the intergalactic vector potential 2 ( $\vec{A}_{ig}$), as the most efficient constructions of radiators, modulators and material bodies of the detector those made in the form of rectilinear rods 6, 7, 13 (Figs. 1, 2) as well as multilayer and single-layer spirals 17, 18, 19, 23 (Figs.3-5) including those built as toroids (Fig.6) should be taken, which constructions allow to concentrate considerable amount of the signal radiating particles in a limited space volume and to use as if a waveguide effect of radiation intensity concentration.

Therewith for increasing intensity of the transmitted signal in certain direction, reliability of its detection and protection against the signal interception, the diameter to length ratio of the rod-radiator 6 is chosen no more than 0.001 what ensures the information signal radiation, for the most part, into a relatively narrow cone with an angle $\alpha$ of 28°.

Producing the radiators 6, 17, 19 of the transmitter 5 and the material bodies 13, 23 of the detector 9 sensing element from a material of high density (no less than 8000 kg/m3) makes it possible to increase number of particles (per unit volume) involved in radiation and detection of the information signal, and, as a consequence, to diminish the overall dimensions of the transmitter as well as the energy expenditure for creating field of the vector potential 1 ( $\vec{A}$ ) in it.

Producing the radiators 6, 17, 19, modulators 7, 18, 19 of the transmitter 5 and/or the material body 13, 23 of the detector 9 sensing element from materials being in various physical states (liquid, gaseous or plasma ones) makes it possible, using special features of these states (for example, possibility of attaining superhigh current 27 ( $\vec{I}$ ) in plasma systems), to expand technical parameters of the applicated apparatus.

According to claim 6 the proposed "Method. . ." may be carried out also by way of using the vector potential $\vec{A}$ fields created by constant magnets. Generation and transmission of the information signal are performed in this case by varying (for example, with the aid of a mechanical drive) position of the modulator made as a magnetic system based on constant magnets (claim 37) relative to the radiators 6, 17 of the transmitter 5 (i.e. by way of a programmed (carrying the transferred information) variation of magnetic system-modulator distance from the radiator and/or by way of variation of this system orientation in space relative to the radiator).

The vector potential $\vec{A}$ of natural sources may take considerable values. For example, the Earth's vector potential exceeds that of available artificial current systems more than by an order of magnitude and ranges up to about $1.3 \cdot 10^8 Gs \cdot cm$ at the equator. Taking into account the tilt of the rotation axis as well as that of the Earth's dipole relative to the geographical poles, we obtain that the Earth's potential $\vec{A}$ maximum value projection onto the intergalactic vector potential $\vec{A}$ direction is of about $8 \cdot 10^7 Gs \cdot cm$. The potential $\vec{A}$ created by the Sun's dipole magnetic field at a range of the Earth's orbit (150 million km) equal $\vec{A} = (1.5-3.0) \cdot 10^8 Gs \cdot cm$, i.e. even greater than the Earth's $\vec{A}$. (It will be recalled therewith that the intergalactic potential $\vec{A}_{ig}$ is equal to $1.95 \cdot 10^{11} Gs \cdot cm$ in magnitude). So the information transfer according to the proposed "Method..." may be carried out also by using the fields of natural sources of the vector potential (claim 7). It should be noted that in the above cited work of Yu.Baurov, V.Schutov "On the vector magnetic potential influence onto the $\beta$-decay rate" (Intern. conf. "Space, time, gravitation", Program and abstracts, May 23-28, 1994, St.-Petersburg, Russia) just these field were used.

The realization of the assumed invention will provide the information transfer with increased range and velocity as compared with the known systems by using comparatively simple apparatus.

The performed preliminary investigations have corroborated the realizability of its main physical principles.

**Claims**

1. The method of information transfer comprising forming, transmitting and detecting an information signal which is formed and transmitted by creating and varying a field of the summary vector potential $\vec{A}$ being equal to the sum of a current vector potential and the intergalactic vector potential $\vec{A}_{ig}$ in a local space region, therewith the signal is detected by registering physical effects caused by creation and existence of the said summary vector potential $\vec{A}_{sum}$ as well as of this potential variations.

2. The method of claim 1 wherein creating and varying the field of the summary vector potential $\vec{A}_{sum}$ as well as forming and transmitting the information signal are performed by the action of a current vector potential variable field directed at an angle from 90° to 270° with respect to the intergalactic vector potential $\vec{A}_{ig}$ on a radiator arranged in the transmitter in the formed region of decreased values of the summary vector potential $\vec{A}_{sum}$ and oriented towards the signal detector, whereas the signal detecting is carried out by way of registering the variation of a radioactive substance decay activity due to the action of the said potential $\vec{A}_{sum}$ field variations on the decay.

3. The method of claim 1 wherein as radioactive substances those having the property of $\beta$-decay are used.

4. The method of claim 1 wherein creating and varying the field of the summary vector potential $\vec{A}_{sum}$ as well as forming and transmitting the information signal are performed by the action of a current vector potential $\vec{A}$ variable field directed at an angle from 90° to 270° with respect to the intergalactic vector potential $\vec{A}_{ig}$ on a radiator arranged in the transmitter in the formed region of decreased values of the summary vector potential $\vec{A}_{sum}$ and oriented towards the signal detector, whereas the signal detecting is carried out by way of registering the variations of electric voltage through a superconducting quantum interferometer (SQUID) located in the signal detector.

5. The method of information transfer of claims 2, 4 wherein the field of the current vector potential $\vec{A}$ is formed by way of passing electric current through current carrying elements located in the space region where the radiator is positioned.

6. The method of information transfer of claims 2, 4 wherein the field of the current vector potential $\vec{A}$ is created by positioning constant magnets in the space region in which the radiator is located.

7. The method of claims 2, 4 in which as a field of the current vector potential $\vec{A}$ that of natural vector potential sources, for example, the Earth's vector potential field, is used.

8. The method of claims 5 wherein the value of summary vector potential $\vec{A}_{sum}$ is varied in the space region in which the radiator is positioned by way of varying the value and/or the direction of electric current passing through the current carrying elements.

9. The method of claims 6, 7 wherein the value of the summary vector potential $\vec{A}_{sum}$ is varied in the space region where the radiator is located by varying the relative positions of the radiator and vector potential field source.

10. The method of claims 1, 2, 4 wherein the radiator of the transmitter is initially polarized and arranged into the transmitter so that the magnetic moment of atoms and spins of elementary particles are directed perpendicularly to the vector potential $\vec{A}_{ig}$.

11. The system of information transfer comprising a transmitter (5) with a radiator (6, 17, 19) and a modulator (7, 18, 19,) as well as a detector (9) of the information signal with a sensing element, wherein
the radiator is arranged in the field of the modulator current vector potential 1 ( $\vec{A}$ ), and the sensing element of the detector is made as a container 10 with a β-radioactive substance, which container is provided with a sensor 11 of (-decay activity, for example, an electron counter, connected to a system of analyzing parameters of a signal coming from the sensor 11 and separating the information signal.

12. The system of claim 11, wherein the radiator (6, 17, 19) of the transmitter (5) is made from a material with density no less than 8000 kg/m3.

13. The system of information transfer comprising a transmitter (5) with a radiator (6, 17, 19) and a modulator (7, 18, 19) as well as a detector (9) of the information signal with a sensing element, wherein
the radiator is arranged in the field of the modulator current vector potential 1 ( $\vec{A}$ ), and the sensing element of the detector is made as a material body (13, 23) passing through the opening of a SQUID (14) ring, which SQUID is connected to a system of analyzing parameters of a signal coming from the SQUID and separating the information signal.

14. The information transfer system of claims 13, wherein the radiator (6, 17, 19) of the transmitter (5) and the material body (13, 23) of the detector (9) sensing element are made from a material with density no less than 8000kg/m3.

15. The information transfer system of claims 13, wherein the material body (13, 23) of the detector (9) sensing element and the SQUID (14) are positioned into an electromagnetic shield (16).

16. The information transfer system of claims 11, 13, wherein the radiator of the transmitter (5) is made in the form of a rectilinear rod (6) and the modulator is made as a conductor (7) connected to an electric current source and arranged in parallel with the rod-radiator (6).

17. The information transfer system of claim 16, wherein the rod-radiator (6) of the transmitter (5) is made with a diameter to length ratio being no more than 0.001.

18. The information transfer system of claims 11, 13, wherein the radiator and the modulator of the transmitter (5) are made as material bodies of arbitrary shapes.

19. The information transfer system of claim 18, wherein the radiator and the modulator of the transmitter (5) are made in the form of spirals (17, 18, 19), therewith the tangent line (20) to the axis (21) of the spiral-radiator wire (17, 19) at its exit point (22) on the spiral is oriented towards the region where the detector (9) is placed.

20. The system of information transfer of claim 19, wherein the radiator of the transmitter (5) is made in the form of a multilayer spiral.

21. The information transfer system of claim 19, wherein the spirals of the radiator (17, 19) and modulator (18, 19) of the transmitter (5) are made as toroids.

22. The information transfer system of claim 19, wherein the spiral of the radiator (17) is arranged in the interior space of the modulator (18) spiral.

23. The information transfer system of claims 19, wherein the spiral of the radiator (17) is arranged outside of the modulator (18) spiral.

24. The system of information transfer of claim 13, wherein the material body of the detector (9) sensing element is made in the form of a rectilinear rod (13) passing through the opening of the SQUID (14) ring.

25. The system of information transfer of claim 13, wherein the sensing element of the detector (9) is made as a material body of an arbitrary shape passing through the opening of the SQUID (14) ring.

26. The system of information transfer of claim 25, wherein the material body of the detector (9) sensing element is made in the form of a spiral (23) passing through the opening of the SQUID (14) ring, therewith the tangent line (24) to the axis (25) of the spiral (23) wire at its exit point (26) on the spiral is oriented towards the region where the transmitter (5) is arranged.

27. The system of information transfer of claim 26, wherein the spiral of the detector (9) sensing element is made as a multilayer one.

28. The system of information transfer of claims 11, 13, 16, 18, 19, wherein the transmitter (5) modulator and radiator are made as a unit, for example, in the form of a spiral (19) connected to an electric current source (8).

29. The system of information transfer of claims 11, 13, wherein the radiator of the transmitter (5) is made from a substance being in liquid state.

30. The information transfer system of claims 11, 13, wherein the radiator of the transmitter (5) is made from a substance being in gaseous state.

31. The information transfer system of claims 11, 13, wherein the radiator of the transmitter (5) is made from a substance being in plasma state.

32. The information transfer system of claims 11, 13, wherein the modulator of the transmitter (5) is made from a substance being in liquid state.

33. The information transfer system of claims 11, 13, wherein the modulator of the transmitter (5) is made from a substance being in plasma state.

34. The information transfer system of claim 13, wherein the material body of the detector (9) sensing element is made from a substance being in liquid state.

35. The information transfer system of claim 13, wherein the material body of the detector (9) sensing element is made from a substance being in gaseous state.

36. The information transfer system of claim 13, wherein the material body of the detector (9) sensing element is made from a substance being in plasma state.

37. The information transfer system of claims 11, 13, wherein the modulator of the transmitter (5) is built as a magnetic system on constant magnets and provided with a drive to vary its position relative to the radiator (6, 17, 19).

Fig. 1

Fig. 2

Fig. 3

Fig. 4

Fig. 5

Fig. 6

# INTERNATIONAL SEARCH REPORT

| | International application No. |
|---|---|
| | PCT/RU 94/00281 |

**A. CLASSIFICATION OF SUBJECT MATTER**

IPC 6: H04P 10/00, G01N 24/08, G01R 33/20

According to International Patent Classification (IPC) or to both national classification and IPC

**B. FIELDS SEARCHED**

Minimum documentation searched (classification system followed by classification symbols)

IPC 6: H04P 10/00, G01N 24/08, G01R 33/20

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | A.ABRAHAM. YADERNY MAGNETIZM. 1963, IZD-VO INOSTRANNOI LITERATURY, (MOSCOW), PAGES 83-86, 91-95 | 1-37 |
| A | EP,A2, 0196236, (NATIONAL RESEARCH DEVELOPMENT CORP.), 1 October 1986 (01.10.86) | 6,8,10,11, 13-37 |
| A | EP,A2, 0187389, (ASAHI KASEI KOGYO KABUSHIKI KAISHA), 16 July 1986 (16.07.86) | 6,8,10,11, 13 |
| A | US, A, 4607226, (BRUNKER MEDIZENTECHNIK GmbH), 19 August 1986 (19.08.86) | 3,6,10,11, 13 |
| A | US, A, 4602214, (NATIONAL RESEARCH DEVELOPMENT CORPORATION), 22 July 1986 (22.07.86) | 3,6,8,10,11, 13 |

☐ Further documents are listed in the continuation of Box C. ☐ See patent family annex.

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 23 March 1995 (23.03.95) | 28 April 1995 (28.04.95) |

| Name and mailing address of the ISA/ RU | Authorized officer |
|---|---|
| Facsimile No. | Telephone No. |

Form PCT/ISA/210 (second sheet) (July 1992)